# EUROPEAN PATENT SPECIFICATION

(11) **EP 1 369 637 B1**
(45) Date of publication and mention of the grant of the patent: **14.12.2005**
(21) Application number: 03253434.9
(22) Date of filing: 31.05.2003
(51) Int. Cl.: F16L 55/165, F16L 33/22

(54) **Transition fitting for a pipe liner**
Übergangsstück für eine Rohrauskleidung
Raccord de transition de revêtement interne pour tuyaux

(30) Priority: 05.06.2002 GB 0212809
(43) Date of publication of application: 10.12.2003
(73) Proprietor: Uponor Innovation AB, 513 81 Fristad (SE)
(72) Inventor: Muckle, Derek, Long Whatton, Leicestershire LE12 5DN (GB)
(74) Representative: Stainthorpe, Vanessa Juliet

(56) References cited:
- WO-A-00/63605
- WO-A-98/26207
- DE-B- 1 223 136
- GB-A- 2 263 744
- NL-A- 9 500 454
- US-A- 550 560
- US-A- 2 709 606
- US-A- 4 622 197
- US-A- 4 679 826
- PATENT ABSTRACTS OF JAPAN vol. 016, no. 426 (M-1306), 8 September 1992 (1992-09-08) -& JP 04 146031 A (BRIDGESTONE CORP), 20 May 1992 (1992-05-20)

## Description

This invention relates to a pipe provided with an expandable pipe liner and having a transition fitting.

Rehabilitation of water supply pipes is a major problem for many water companies. As an alternative to direct replacement, a variety of methods have been proposed for relining water pipes, such as, for example, those disclosed in WO92/09843, WO92/08922, US474178, WO97/10943, and WO98/54509.

However such methods are not readily applicable to the small bore pipes customarily used in domestic premises. A large number of such premises are still equipped with lead pipes, which represents a major public health problem as the slightly soluble lead is an accumulative poison.

As an alternative to complete replacement of lead pipes, it has been proposed in WO97/04269 to line the pipes with a polyethylene film which is everted by fluid pressure into the pipe. In another method, a polyethyleneterepthalate film is extruded as a profile, inserted in the pipe, inflated by fluid pressure and heated in situ. This presses the lining against the inner walls of the pipe and softens the lining to promote thermal bonding to the pipe wall.

A simpler and cheaper trenchless method by which existing lead water pipes, particularly underground pipes, can be rehabilitated with the minimum of disruption and without the need for expensive plant and equipment is disclosed in WO00/63605 which defines the preamble of claim 1.

In the method of WO00/63605 there is deployed a tubular liner within a pipe, characterised in that the liner comprises a polyolefin elastomer or a polyolefin plastomer. A polyolefin elastomer has a specific gravity below 870 kg/m³, whereas a polyolefin plastomer has a specific gravity above 870 kg/m³.

The polyethylene elastomer/plastomer generally comprises a substantially linear ethylene interpolymer, which may comprise 50 to 95% by weight of ethylene, and 5 to 50% by weight of at least one olefinic comonomer, preferably 10 to 25% by weight of the comonomer. Comonomers may contain from 3 to about 20 carbon atoms, and may comprise one or more of propylene, 1-butene, 1-hexene, 4-methyl-1-pentene, 1-heptene, and 1-octene. The specific gravity may be in the range of 830 to 967 kg/m³, preferably 863 to 913 kg/m³ and more preferably 885 to 913 kg/m³, for optimum toughness and flexibility. Preferred comonomers are 1-hexene and especially 1-octene.

The substantially linear inter polymers are advantageously characterised by a narrow molecular weight distribution, especially from 1.8 to 2.2, and a homogenous comonomer distribution.

The tubular liner is formed as a pleated tube with longitudinally extending multiple radial pleats, giving a star shaped, multi-lobed, or fluted cross-section. In one embodiment the tube is formed with six radially equispaced pleats, defining an equal number of outwardly projecting lobes. The liner may be deployed within a pipe, by securing one end of the liner adjacent an end of the pipe to which access has been obtained, and pulling the liner through the pipe by means of a cable attached to a foam messenger pig which is propelled through the pipe by fluid pressure. Alternatively, the liner may be pushed and pulled through the host pipe by means of a flexible rod attached to the liner.

Preferred embodiments of the liner and the method of insertion of the liner into a pipe are disclosed in the body of the specification of WO00/63605. Typically the wall thickness is from 0.25 to 0.55 mm. Such a liner is intended for the rehabilitation of an old lead pipe whose internal diameter is in the range of 10 to 20 mm.

After installation of the liner, and connection of a transition fitting in order to connect the liner and pipe to another pipe line component, the water supply is reconnected to the pipe. The liner is expanded, by the pressure head in the water supplied through the pipe, into a roughly circular shape, and is then stretched in an elastic manner until it comes into contact with the inside surface of the lead pipe wall.

Whilst the above described profiled liner has proved to be a good solution to the problem of relining old lead pipes, its non-circular cross-sectional shape has made it very difficult to design a suitable transition fitting. In addition, certain essential design criteria have been laid down for transition fittings which are difficult to meet using this type of liner. These are as follows:
1. A water tight fitting must be made to the end of the liner, with integrity to at least the maximum operating pressure expected for the liner. For a domestic water system a maximum working pressure of 8 bar is assumed.
2. The liner must be gripped within the transition fitting such that it will not pull out under loading. As a measure of the performance, the liner starts to deform plastically at an elongation level of around 400 to 500% and would be considered unusable after being subjected to this. It is therefore a requirement that the liner shall be retained at the loads generated in straining the liner to 500% of its original size.
3. Pressure head loss in lined pipes, particularly at smaller diameters, is a critical issue. The liner must be designed to maximise the bore of any fitting and where possible to minimise the head loss by a smooth transition profile in the connection to other pipe line components.
4. The transition fitting must additionally anchor the terminated pipe so that the end load from any attached components is transferred initially to the original pipe. This is because the liner itself has only a limited end load capability. Typically, the liner has a tensile strength of around 300 N, compared to the tensile strength of 20mm SDR 9 polyethylene pipe which has a tensile strength of around 2000 N.
5. After installation there should be no unsupported sections of liner in the vicinity of the transition fitting.

It is apparent that there is a need for a new transition fitting and installation method capable of meeting at least some, and preferably all, of the above requirements.

In a first aspect the invention provides a pipe provided with an expandable liner and having a transition fitting which comprises:
an externally tapered insert adapted to be received inside the expandable pipe liner;
An internally tapered collar adapted to co-operate with the tapered insert in order to grip the expandable pipe liner there between; and
An internally threaded compression cap adapted to co-operate with the tapered collar to apply a compressive load to the tapered insert and thereby increase the gripping force between the insert and the collar.

In a preferred aspect, the invention provides a pipe having an expandable liner disposed therein, which liner has an unsupported length extending from an end of the pipe, the pipe having a transition which comprises:
A tubular body, dimensioned to fit over the end of the pipe, the tubular body having at least one orifice in the tubular wall thereof;
   means for securing the fitting to the pipe;
   means for securing the fitting to the expandable liner; and
   liner support means adapted to be received in the tubular body through the orifice and to support an unsupported length of liner within the fitting.

In a preferred embodiment according to the invention, the tubular body of the preferred aspect of the invention is secured to the expandable liner by means of the tapered insert, collar and compression cap of the first aspect of the invention.

The insert preferably has an external tapered face which has the same taper angle as the internal tapered face of the collar. Both components are preferably machined from brass, or another suitable metallic material, or injection moulded from a suitable engineering plastics material.

Preferably the tubular body has two opposed orifices in the tubular wall thereof and the liner support means comprises interlocking profiles which can be inserted through the orifices and joined to form a cylindrical support for the unsupported length of expandable liner.

Preferably the means for securing the fitting to the pipe comprises one or more taper lock plugs disposed within the tubular body of the fitting.

Certain preferred embodiments of the invention will now be described, by way of example only, with reference to the accompanying Drawings in which:
Figure 1 shows a perspective view of a length of star shaped multi-lobed cross section expandable liner of the type described in WO00/63605;
Figure 2 shows a side elevation of a female body component and a collar of a transition fitting according to the invention, assembled on an end of a relined lead pipe with a portion of the star shaped cross section liner protruding from the end of the pipe;
Figure 3 shows a side elevation in section, and two end elevations of the collar of Figure 2;
Figure 4 shows a side elevation in section, and an end elevation of a tapered insert for use in a transition fitting according to the invention;
Figure 5 shows a perspective view of an insertion tool with the insert of Figure 4 in position on the insert carrier;
Figure 6 shows the assembly of Figure 2 with the insertion tool of Figure 5 engaged with the end of the star shaped cross section liner;
Figure 7 shows the arrangement of Figure 6 with the insert carrier pushed forward to expand the prongs and force the insert into the end of the liner;
Figure 8 shows the arrangement of Figure 7 with the insertion tool removed and the tapered insert remaining in the end of the star shaped cross section liner;
Figure 9 shows the arrangement of Figure 8 with the insert pressed into the collar;
Figure 10 shows the arrangement of Figure 9 with a compression cap screwed onto the collar;
Figure 11 shows a side elevation in section, and an end elevation of the compression cap of Figure 10;
Figure 12 shows a side elevation in section of the assembly of the collar, insert, compression cap and star shaped cross section liner of Figure 10;
Figure 13 shows an exploded perspective view of the collar and insert of Figure 12 provided with a second embodiment of a compression cap;
Figure 14 shows a perspective view of apparatus for assembling the second compression cap of Figure 13 onto a polyethylene pipe;
Figure 15 shows a side elevation in section of the assembly of Figure 13 connected to a polyethylene pipe;
Figure 16 shows a perspective view, partly in section and with parts broken away, of the transition fitting body component of Figure 3 showing the sliding taper lock plugs;
Figure 17 shows an exploded view of the parts of a complete transition fitting, in as-supplied condition;
Figure 18 shows a perspective view of a pair of interlocking liner support members for use in a transition fitting in accordance with one aspect of the invention in interlocked relationship; and
Figure 19 shows a perspective view of a fully assembled transition fitting.

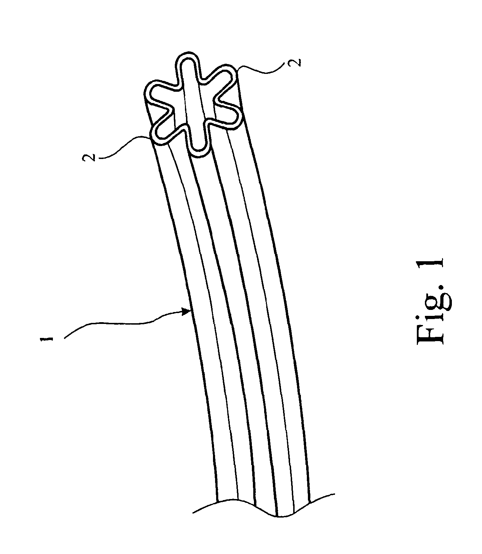

Referring to the Drawings, Figures 1 shows a pipe liner suitable for use with the present invention. The liner, illustrated generally at 1, has a star-shaped profile with 6 symmetrically-arranged lobes 2. This liner is used to reline a lead pipe 3 of nominal bore in the range of 12.5 to 13.0 mm.

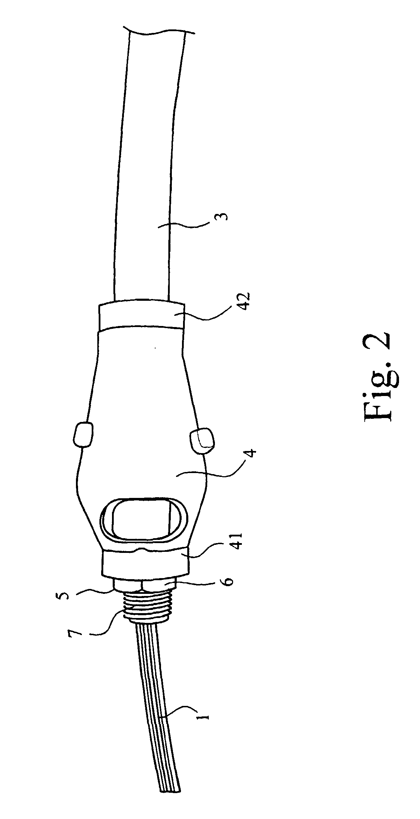

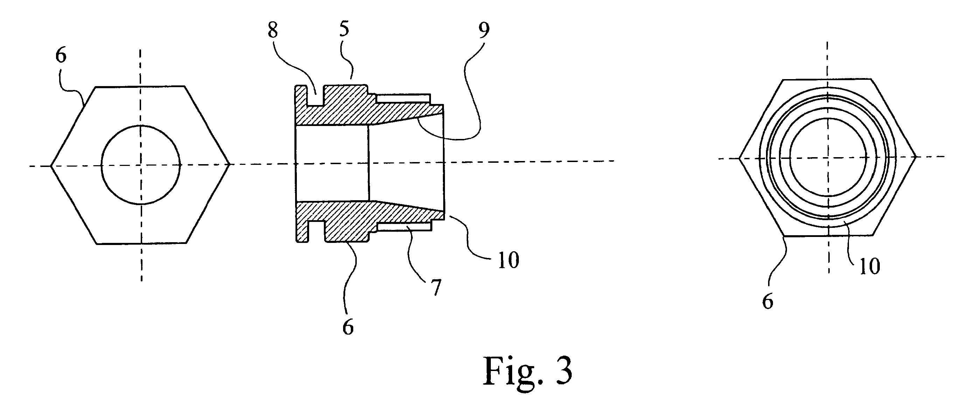

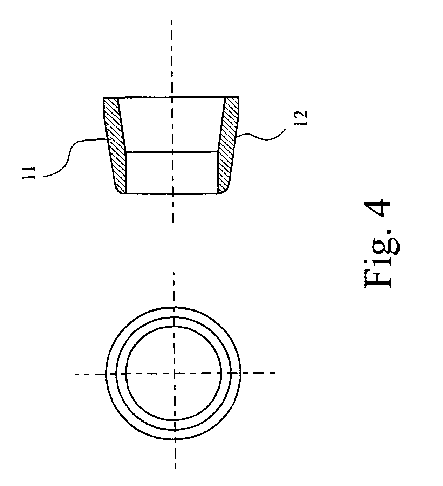

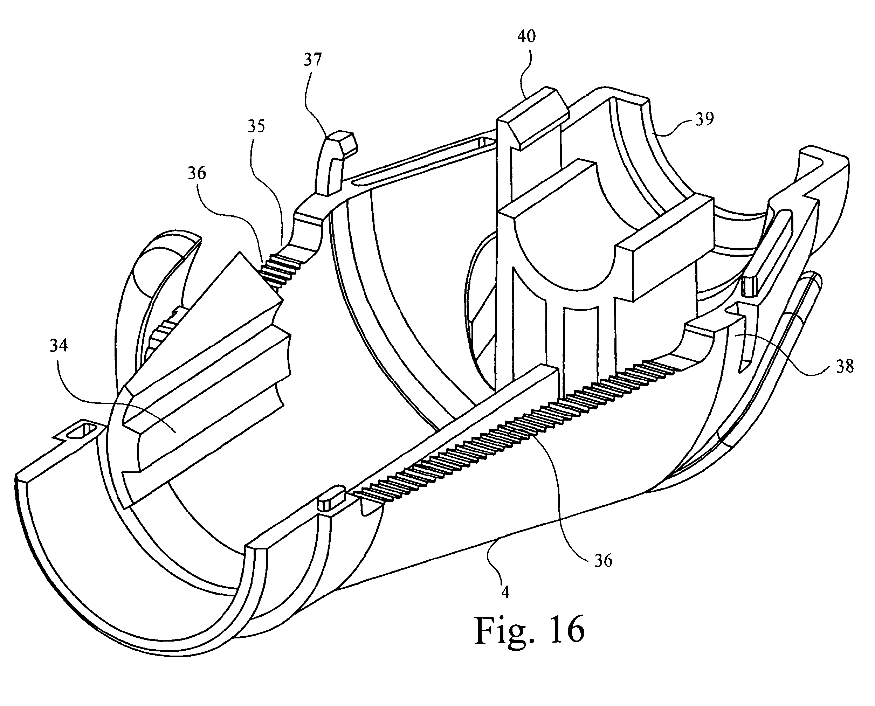

Referring now to Figure 2, there is shown the liner 1 inserted in a lead pipe 3 and protruding a short distance from an end thereof. A transition fitting body component 4 is slidable over the end of the lead pipe 3 and is connected to a brass collar 5. The brass collar has a hexagonal section 6 and a screw threaded end section 7 which protrude from the fitting body 4. An internal circular lip 39 (see Figure 16) on the body component 4 fits into a circular recess 8 on the brass collar 5 in order to make a firm connection therewith. As shown in Figure 3, the brass collar has a bore with a tapered internal section 9 which extends from an end face 10 of the collar.
An annular tapered brass insert 11 is shown in Figure 4. The insert 11 has a tapered outer face 12, which has the same taper angle as the tapered internal bore section 9 of the collar 5. An objective of the transition fitting is to fit the brass insert 11 inside the liner 1 and then to trap the liner between the insert and the inside tapered bore section 9 of the collar 5.

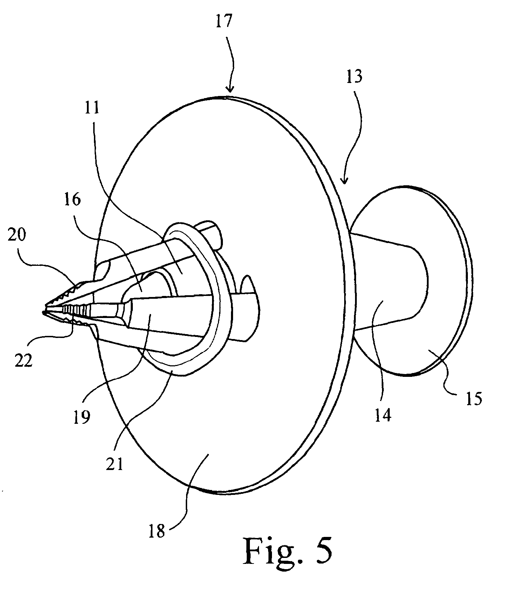

To achieve the expansion of the liner, and the placement of the insert, there is provided a tool, which is depicted in Figures 5 to 13. Referring to Figure 5, the insertion tool, illustrated generally at 13, comprises a shaft 14 having at its remote end a pressure pad 15, and at its near end an insert carrier 16.

In Figure 5 an insert 11 is shown mounted on the insert carrier 16. A carriage 17, slidably mounted upon the shaft 14, comprises a circular plate 18 upon which are pivotally mounted three elongate prongs 19, in a generally cone-shaped configuration. The tips 20 of the prongs 19 are urged together by a rubber ring 21 which extends around the base of the prongs 19. The tips 20 of the prongs 19 are profiled and have serrations 22 in order to receive and grip an end of the liner 1. Although in the illustration only three prongs are shown, it would be possible to have 4, 5, 6 or indeed a greater number of prongs depending upon the diameter of the liner.

In order to expand the liner 1 using the insertion tool 13, the length of liner protruding from the lead pipe 3 is pinched between the fingers of the installer to prevent it sliding and the tips 20 of the prongs 19 are inserted into the exposed end of the liner.

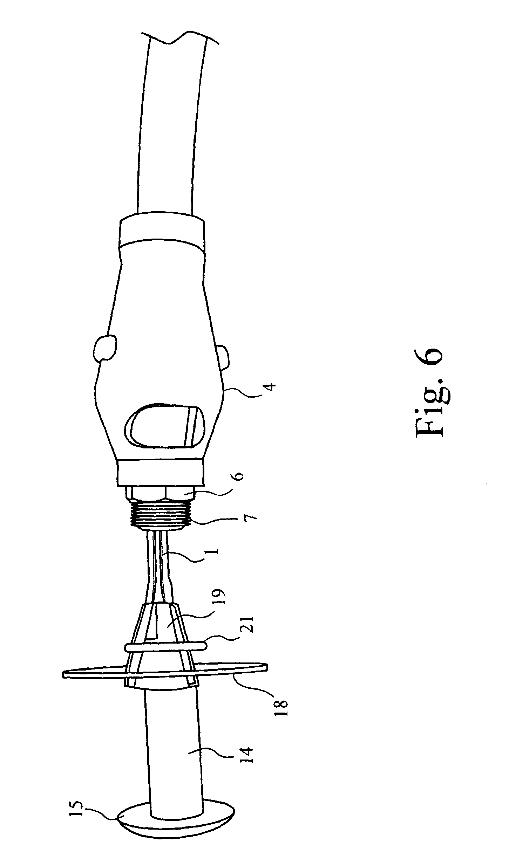

In Figure 6 the insertion tool 13 is shown engaged with the end of the liner with the tips 20 of the prongs 19 inserted therein prior to the expansion step.

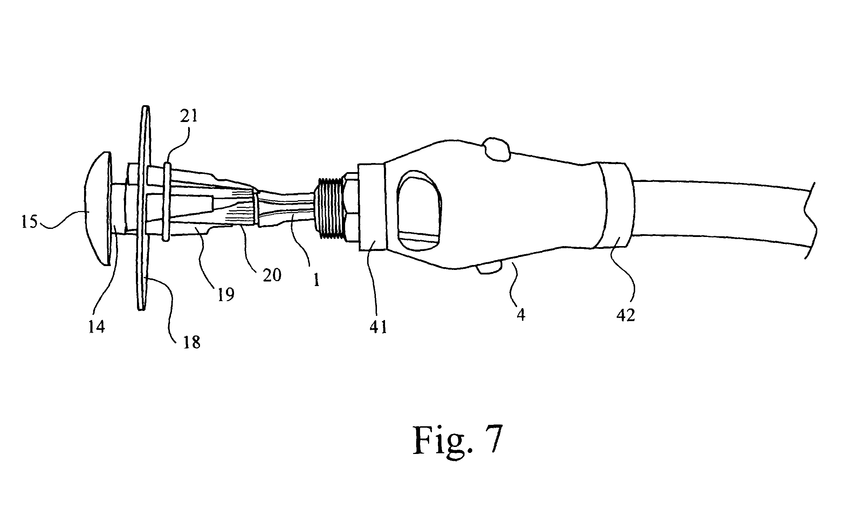

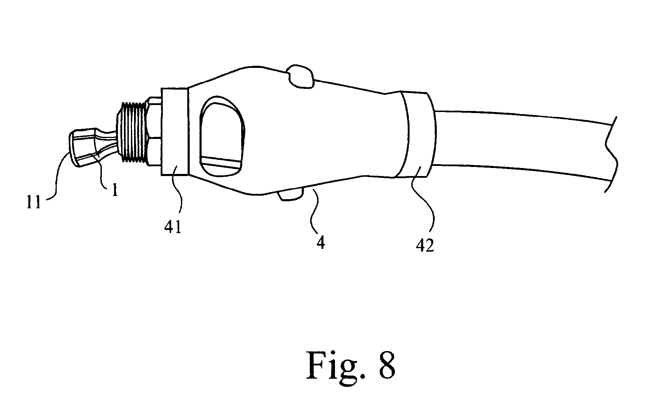

In Figure 7, hand pressure applied to the pad 15 moves the insert carrier 16 forward, relative to the carriage 17, expanding the prongs against the tension of the rubber ring 21 and expanding the end of the liner 1. Once the liner has been expanded sufficiently the insert carrier pushes the insert into the end of the liner where it is gripped and retained. During this procedure it is preferred to keep the liner pinched between the fingers in order to overcome any tendency for the thrust generated by the insert carrier 16 to push the insertion tool 13 off the end of the liner, and instead force the liner to expand. Figure 8 shows the stage at which the insertion tool 13 has been removed leaving the tapered insert 11 gripped by the end of the liner 1.

After removal of the insertion tool the transition fitting body component 4 and brass collar 5 are slid axially along the lead pipe 3 until the insert 11 can be mated with the brass collar 5.

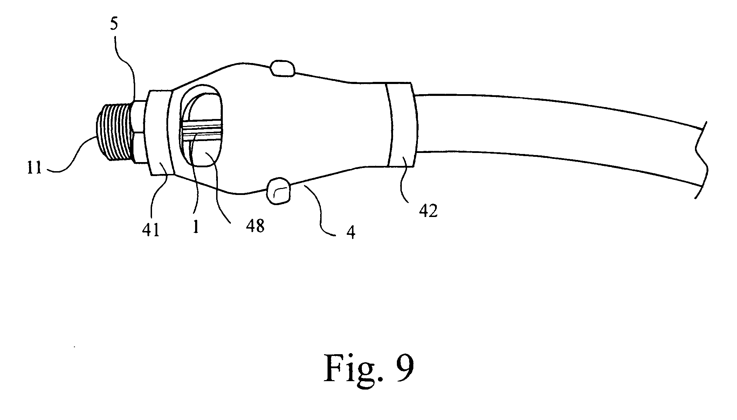

In Figure 9 the insert 11 has been pushed under hand pressure into the brass collar 5 thus compressing the wall of the liner 1 between the tapered walls of the collar and the insert.

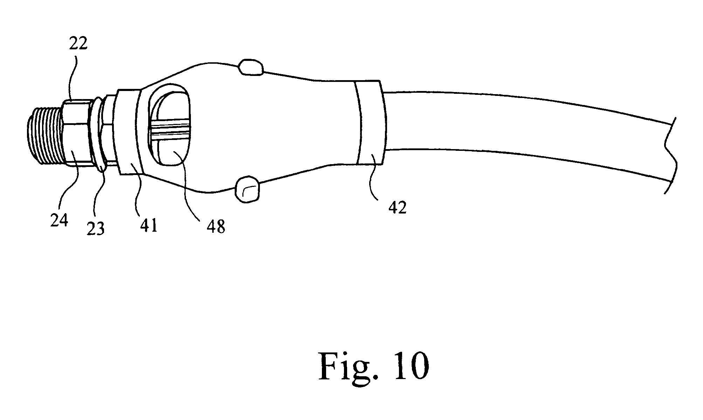

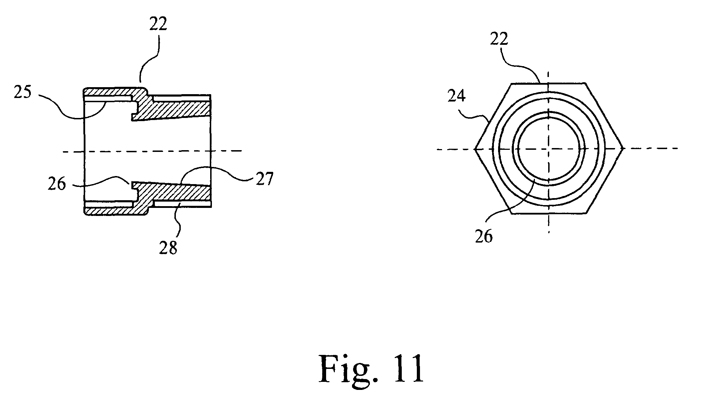

In Figure 10 an internally threaded compression cap 22 has been screwed onto the external thread 6 of the collar 5 to apply axial pressure upon the insert 11, forcing it into the tapered bore 9 of the collar 5 and increasing the compression on the wall of the liner 1. A sealing ring 23 is placed over the collar and is seated between the hexagonal section 5 of the collar and a corresponding hexagonal section 24 on the compression cap 22. The compression cap 22 is shown in more detail in Figure 11, where it can be seen to have an internally threaded section 25, which co-operates with the externally threaded section 6 of the collar 5, and a thrust face 26 which presses against the insert 11. The compression cap has an internal tapered section 27 which cooperates with the taper of the insert 11 to make a smooth flow channel through the fitting. An external thread 28 on the compression cap 22 permits the transition fitting to be connected to other components.

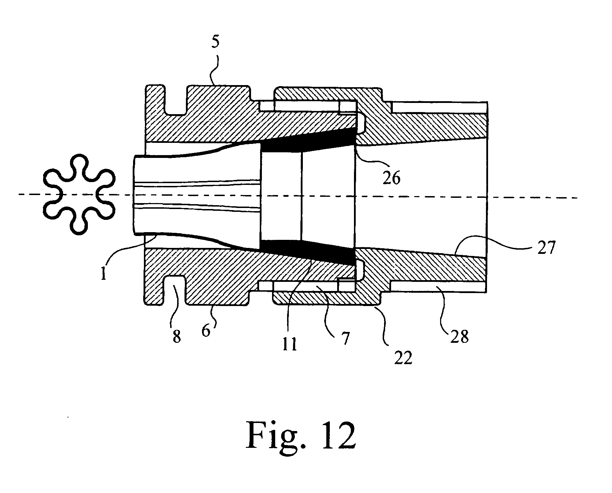

The assembled compression cap, collar and insert are shown in cross section in Figure 12.

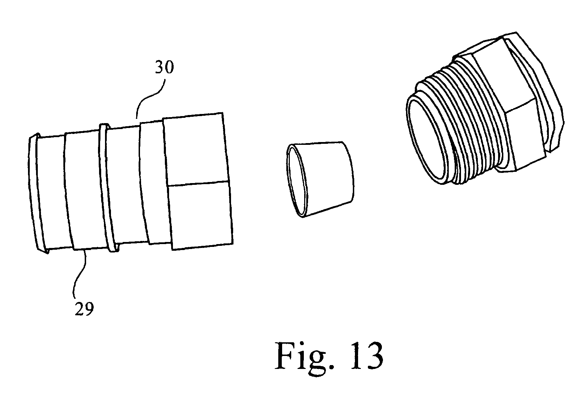

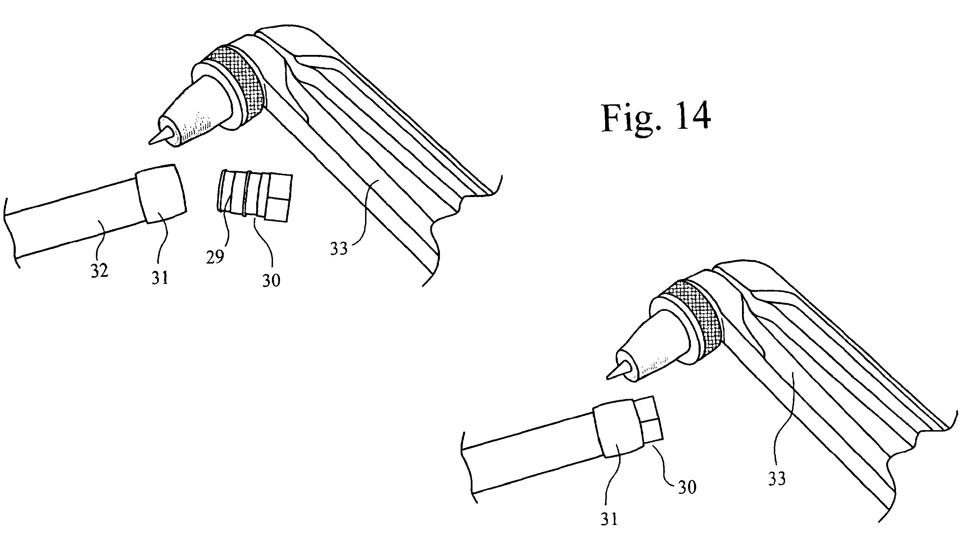

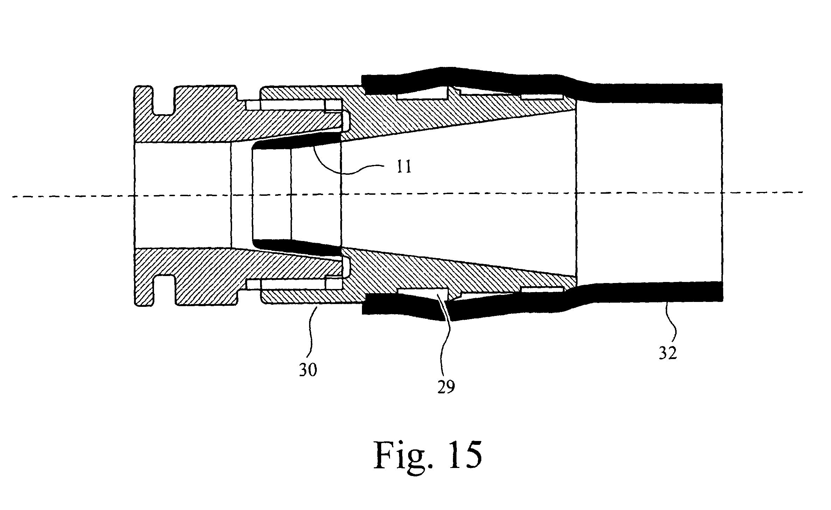

Figure 13 shows a second design in which the threaded section 28 on the compression cap 22 of Figure 12 is replaced by a ribbed, profiled section 29 on the second compression cap 30. The assembly of such system is shown in Figure 14. A cross-linked polyethylene sleeve 31 is placed over an end of a polyethylene pipe 32 to be connected to the compression cap 30. An insertion tool 33 is then used to expand the cross-linked polyethylene sleeve 31 and the end of the polyethylene pipe 32 sufficiently to allow the insertion into the pipe 32 of the profiled section 29 of the compression cap 30. After the tool is removed and the compression cap inserted in position, the cross-linked polyethylene sleeve recovers and forces the polyethylene pipe into tight conformity with the profiled section 29 of the compression cap 30. Figure 15 shows the second compression cap 30 inserted into the polyethylene pipe 32, with the outer cross-linked polyethylene sleeve 31 omitted.

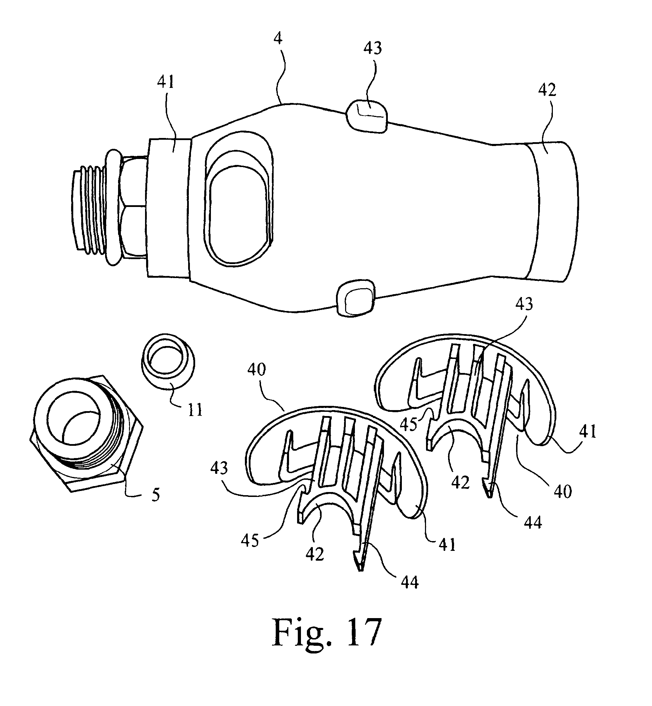

Figure 16 shows one half-shell of the moulded fitting body 4, showing the position of the sliding taper lock plug 34. Two taper lock plugs 34 are provided, of which only one is shown. The taper lock plugs run in channels 35, which are provided with a ratchet detail 36. Each half-shell of the body 4 is provided with a press fit locking hook 37 which engages in a corresponding recess 38 on the other half-shell. Circular lips 39 engage with the annular recess 8 in the collar 4. Also illustrated in Figure 16 is one of two liner support insert members 40, the function of which will be more particularly described hereinafter. The two half-shells of the body 4 are a press fit together and are held by metal circlips 41, 42 which slide over each end of the assembled body 4 as shown in Figure 17. As can be seen from Figure 17, the taper lock plugs have protruding integral buttons 43 which enable the taper lock plugs to be moved along the taper of the body 4, in the channels 35, to engage the lead pipe 3 (see Figure 3) forming a connection which resists axial pull-out forces.

By sliding the body component 4 and brass collar 5 axially along the lead pipe in order to mate the brass collar 5 with the insert 11, a length of the liner is left unsupported within the fitting, as can be seen through the apertures 48 in Figure 10. Apertures 48 are sized in order to allow for the axial displacement of the body component 4 and to accommodate the interlocking liner support members 40.

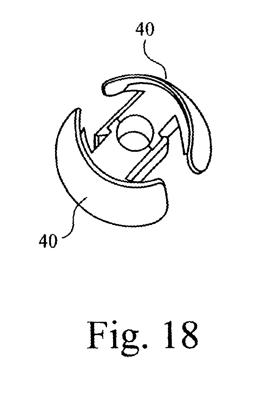

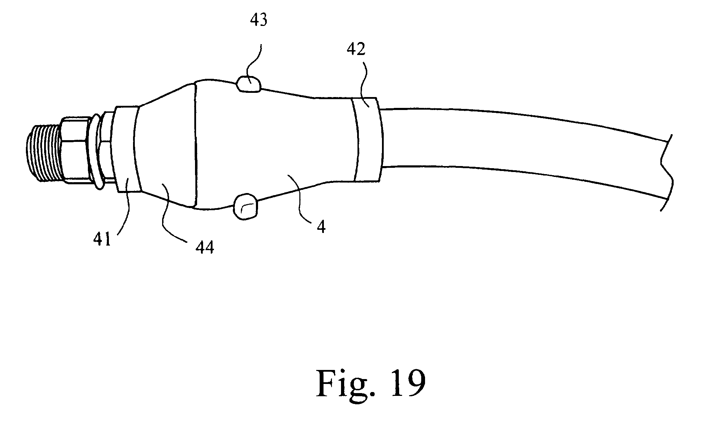

The interlocking liner support insert members 40 are shown in Figures 18 to 20. Each insert member 40 has an external saddle-shaped portion 44 upon which is mounted a semi-circular liner support 45 on pillars 46. The liner support insert members 40 have extending hooks 47 which are a press fit against shoulders 47a. The assembled interlocked liner support inserts are shown in Figure 18.

In installing the liner support insert members 40, they are each inserted into the apertures 48 and pressed together to lock them within the body component 4. The interlocked liner supports 45 encircle the unsupported liner and provide the required stability in use.

The fully assembled transition fitting is illustrated in Figure 21.

Tests on a fitting in accordance with the invention have shown excellent results and have met all the design criteria.

The reader's attention is directed to all papers and documents which are filed concurrently with or previous to this specification in connection with this application and which are open to public inspection with this specification.

## Claims

1. A pipe provided with an expandable pipe liner and having a transition fitting wherein the transition fitting comprises:
an externally tapered insert adapted to be received inside the expandable pipe liner;
An internally tapered collar adapted to co-operate with the tapered insert in order to grip the expandable pipe liner there between; **characterized in that** the transition fitting further comprises
An internally threaded compression cap adapted to co-operate with the internally tapered collar to apply a compressive load to the tapered insert and thereby increase the gripping force between the insert and the collar.

2. A pipe according to claim 1, in which the insert has an external tapered face which has substantially the same taper angle as the internal tapered face of the collar.

3. A pipe according to claim 1 or 2, in which the insert and the collar are machined from brass, or another metallic material, or injection moulded from an engineering plastics material.

4. A pipe according to any one of the preceding claims, in which the internally tapered collar is provided with connecting means for connection to a body component adapted to fit over and be secured to a pipe end.

5. A pipe according to claim 4, in which the internally tapered collar is provided with a circular recess and the body component is provided with an internal circular lip which fits into the circular recess.

6. A pipe according to any one of the preceding claims, in which the compression cap has an externally threaded section for connection to another component.

7. A pipe according to any one of claims 1 to 5, in which the compression cap has a ribbed, profiled section for connection to another component.

8. A pipe according to claim 1, the pipe having an expandable liner disposed therein, which liner has an unsupported length extending from an end of the pipe, the pipe having a transition fitting comprising:
a tubular body, dimensioned to fit over the end of the pipe, the tubular body having at least one orifice in the tubular wall thereof;
means for securing the fitting to the pipe;
means for securing the fitting to the expandable liner; and
liner support means adapted to be received in the tubular body through the orifice and to support an unsupported length of liner within the fitting.

9. A pipe according to claim 8, in which the tubular body has two opposed orifices in the tubular wall thereof and the liner support means comprises interlocking profiles which can be inserted through the orifices and joined to form a cylindrical support for the unsupported length of expandable liner.

10. A pipe according to claim 8 or claim 9, in which the tubular body is formed from two half-shells.

11. A pipe according to any one of claims 8 to 10, in which the means for connecting the tubular body to the pipe comprises one or more taper lock plugs.

12. A pipe according to claim 11, in which each of the one or more taper lock plugs slides in a channel in the tubular body.

13. A pipe according to any one of claims 8 to 12, in which the means for securing the fitting to the expandable liner comprises:
an externally tapered insert adapted to be received inside the expandable pipe liner;
an internally tapered collar adapted to co-operate with the tapered insert in order to grip the expandable pipe liner there between, the collar being provided with a circular recess; and
an internally threaded compression cap adapted to co-operate with the internally tapered collar to apply an end load to the tapered insert and thereby increase the gripping force between the insert and the collar,
the body being provided with an internal circular lip which fits into the circular recess on the collar.

## Patentansprüche

1. Rohr mit einem aufweitbaren Rohr-Liner und einem Übergangs-Fitting, wobei der Übergangs-Fitting aufweist:
einen außen verjüngten Einsatz zur Aufnahme in dem aufweitbaren Rohr-Liner;
einen innen verjüngten Kragen zum Zusammenwirken mit dem verjüngten Einsatz zwecks Greifens des aufweitbaren Rohr-Liners zwischen dem Kragen und dem Einsatz;
**dadurch gekennzeichnet, dass** das Übergangs-Fitting ferner aufweist:
eine mit Innengewinde versehene Kompressionskappe zum Zusammenwirken mit dem innen verjüngten Kragen, um auf den verjüngten Einsatz eine Kompressionslast auszuüben und **dadurch** die Greifkraft zwischen dem Einsatz und dem Kragen zu verstärken.

2. Rohr nach Anspruch 1, bei dem der Einsatz eine verjüngte Außenfläche aufweist, die im Wesentlichen den gleichen Verjüngungswinkel wie die verjüngte Innenfläche des Kragens hat.

3. Rohr nach Anspruch 1 oder 2, bei dem der Einsatz und der Kragen aus Messing oder einem anderen Metallmaterial maschiniert oder im Spritzguss aus einem technischen Plastikmaterial geformt sind.

4. Rohr nach einem der vorhergehenden Ansprüche, bei dem der innen verjüngte Kragen mit einer Verbindungsvorrichtung zur Verbindung mit einer Körperkomponente versehen ist, die passend auf einem Rohrende angeordnet und an diesem befestigt werden kann.

5. Rohr nach Anspruch 4, bei dem der innen verjüngte Kragen mit einer kreisförmigen Ausnehmung versehen ist und die Körperkomponente mit einer kreisförmigen Innenlippe versehen ist, die in die kreisförmige Ausnehmung passt.

6. Rohr nach einem der vorhergehenden Ansprüche, bei dem die Kompressionskappe einen Außengewindeabschnitt zur Verbindung mit einer weiteren Komponente aufweist.

7. Rohr nach einem der Ansprüche 1 bis 5, bei dem die Kompressionskappe einen gerippten profilierten Abschnitt zur Verbindung mit einer weiteren Komponente aufweist.

8. Rohr nach Anspruch 1, wobei in dem Rohr ein aufweitbarer Liner angeordnet ist, der eine von einem Ende des Rohrs ausgehende Freilänge hat, wobei das Rohr mit einem Übergangs-Fitting versehen ist, das aufweist:
einen rohrförmigen Körper, das zum passenden Aufsatz auf das Ende des Rohrs dimensioniert ist, wobei der rohrförmige Körper mindestens eine Öffnung in seiner rohrförmigen Wand aufweist;
eine Vorrichtung zum Befestigen des Fitting an dem Rohr;
eine Vorrichtung zum Befestigen des Fitting an dem aufweitbaren Liner; und
einer Liner-Haltevorrichtung, die in der Lage ist, durch die Öffnung hindurch in dem rohrförmigen Körper aufgenommen zu werden und eine Freilänge des Liners in dem Fitting zu halten.

9. Rohr nach Anspruch 8, bei dem der rohrförmige Körper zwei einander gegenüberliegende Öffnungen in seiner rohrförmigen Wand aufweist und die Liner-Haltevorrichtung ineinandergreifende Profile aufweist, die durch die Öffnungen hindurch eingeführt und derart miteinander verbunden werden können, dass eine zylindrische Halterung für die Freilänge des aufweitbaren Liners gebildet wird.

10. Rohr nach Anspruch 8 oder Anspruch 9, bei dem der rohrförmige Körper aus zwei Halbschalen gebildet ist.

11. Rohr nach einem der Ansprüche 8 bis 10, bei dem die Vorrichtung zum Verbinden des rohrförmigen Körpers mit dem Rohr einen oder mehrere verjüngte Verriegelungs-Steckteile aufweist.

12. Rohr nach Anspruch 11, bei dem jedes der einen oder mehreren verjüngten Verriegelungs-Steckteile in einem in dem rohrförmigen Körper ausgebildeten Kanal gleitbar ist.

13. Rohr nach einem der Ansprüche 8 bis 12, bei dem die Vorrichtung zum Befestigen des Fitting an dem aufweitbaren Liner aufweist:
einen außen verjüngten Einsatz, der in dem aufweitbaren Rohr-Liner aufgenommen werden kann;
einen innen verjüngten Kragen, der mit dem verjüngten Einsatz zusammenwirken kann, um den aufweitbaren Rohr-Liner zwischen dem Kragen und dem Einsatz zu greifen, wobei der Kragen mit einer kreisförmigen Ausnehmung versehen ist; und
eine mit Innengewinde versehene Kompressionskappe, die mit dem innen verjüngten Kragen zusammenwirken kann, um auf den verjüngten Einsatz eine End-Belastung auszuüben und **dadurch** die Greifkraft zwischen dem Einsatz und dem Kragen zu verstärken,
wobei der Körper mit einer kreisförmigen Innenlippe versehen ist, die in die im Kragen ausgebildete kreisförmige Ausnehmung passt.

## Revendications

1. Conduit doté d'un tuyau interne expansible et ayant un raccord de transition, dans lequel le raccord de transition comprend :
- un insert effilé extérieurement adapté pour être reçu à l'intérieur du tuyau interne expansible ;
- un collier effilé intérieurement, adapté pour coopérer avec l'insert effilé de façon à saisir le tuyau interne expansible expansible entre eux ;
**caractérisé par le fait que** le raccord de transition comprend en outre :
- un capuchon de compression taraudé intérieurement, adapté pour coopérer avec le collier effilé intérieurement pour appliquer une charge de compression sur l'insert effilé et augmenter par là la force de saisie entre l'insert et le collier.

2. Conduit selon la revendication 1, dans lequel l'insert a une face effilée externe qui a sensiblement le même angle de conicité que la face effilée interne du collier.

3. Conduit selon la revendication 1 ou 2, dans lequel l'insert et le collier sont usinés en laiton, ou en une autre matière métallique, ou moulés par injection en matière plastique technique.

4. Conduit selon l'une quelconque des revendications précédentes, dans lequel le collier effilé intérieurement est doté de moyen de connexion en vue d'une connexion à un composant de corps adapté pour s'ajuster sur et être fixé à une extrémité de conduit.

5. Conduit selon la revendication 4, dans lequel le collier effilé intérieurement est doté d'une cavité circulaire et le composant de corps est doté d'une lèvre circulaire interne, qui s'ajuste dans la cavité circulaire.

6. Conduit selon l'une quelconque des revendications précédentes, dans lequel le capuchon de compression a une section filetée extérieurement en vue d'une connexion à un autre composant.

7. Conduit selon l'une quelconque des revendications 1 à 5, dans lequel le capuchon de compression a une section profilée, à nervures, en vue d'une connexion à un autre composant.

8. Conduit selon la revendication 1, le conduit ayant un tuyau interne expansible disposé dans celui-ci, lequel tuyau interne a une longueur non supportée s'étendant à partir d'une extrémité du conduit, le conduit ayant un raccord de transition comprenant :
- un corps tubulaire, dimensionné pour s'ajuster sur l'extrémité du conduit, le corps tubulaire ayant au moins un orifice dans la paroi tubulaire de celui-ci ;
- un moyen pour fixer le raccord au conduit ;
- un moyen pour fixer le raccord au tuyau interne expansible ; et
- un moyen de support de tuyau interne adapté pour être reçu dans le corps tubulaire à travers l'orifice et pour supporter une longueur non supportée de tuyau interne à l'intérieur du raccord.

9. Conduit selon la revendication 8, dans lequel le corps tubulaire a deux orifices opposés dans la paroi tubulaire de celui-ci, et le moyen de support de tuyau interne comprend des profilés à verrouillage réciproque qui peuvent être introduits à travers les orifices et réunis pour former un support cylindrique pour la longueur non supportée de tuyau interne expansible.

10. Conduit selon la revendication 8 ou la revendication 9, dans lequel le corps tubulaire est formé de deux demi-coquilles.

11. Conduit selon l'une quelconque des revendications 8 à 10, dans lequel le moyen pour connecter le corps tubulaire au conduit comprend un ou plusieurs bouchons de verrouillage coniques.

12. Conduit selon la revendication 11, dans lequel chacun parmi un ou plusieurs bouchons de verrouillage coniques coulisse dans un canal dans le corps tubulaire.

13. Conduit selon l'une quelconque des revendications 8 à 12, dans lequel le moyen de fixation du raccord au tuyau interne expansible comprend :
- un insert effilé extérieurement, adapté pour être reçu à l'intérieur du tuyau interne expansible ;
- un collier effilé intérieurement, adapté pour coopérer avec l'insert effilé de façon à saisir le tuyau interne expansible entre eux, le collier étant doté d'une cavité circulaire ; et
- un capuchon de compression taraudé intérieurement, adapté pour coopérer avec le collier effilé intérieurement pour appliquer une charge d'extrémité sur l'insert effilé et par là augmenter la force de saisie entre l'insert et le collier ;
le corps étant doté d'une lèvre circulaire interne qui s'ajuste dans la cavité circulaire sur le collier.
